# NEW EUROPEAN PATENT SPECIFICATION

(11) **EP 2 337 891 B2**
(45) Date of publication and mention of the opposition decision: **18.11.2020**
(45) Mention of the grant of the patent: 05.07.2017
(21) Application number: 08797934.0
(22) Date of filing: 15.08.2008
(51) Int. Cl.: D07B 1/16, B66B 23/24, B66B 7/06

(54) **Use of a melemine based compound as a geometry stabilizer in an assembly comprising an elongated tension member and a jacket covering the tension member.**
Verwendung einer Zusammensetzung auf Melamin-Basis als Geometriestabilsator in einer Anordnung, die ein gestrecktes Zugglied und eine Hülle umfasst.
Utilisation d'une composition à base de mélamine comme stabilisateur de géométrie dans un ensembe comprenant un élément de tension et une veste recouvrant ledit élément.

(43) Date of publication of application: 29.06.2011
(73) Proprietor: Otis Elevator Company, Farmington CT 06032 (US)
(72) Inventor: KRISHNAN, Gopal, R., Wethersfield Connecticut 06109 (US); YU, Xiaomei, Glastonbury Connecticut 06033 (US); WESSON, John, P., Vernon CT 06066 (US); MILTON-BENOIT, John, M., West Suffield Connecticut 06093 (US)
(74) Representative: Schmitt-Nilson Schraud Waibel Wohlfrom Patentanwälte Partnerschaft mbB
(86) International application number: PCT/US2008/073234
(87) International publication number: WO 2010/019150

(56) References cited:
- EP-A- 1 671 913
- EP-A2- 1 550 698
- WO-A-96/27635
- WO-A-2007/006989
- GB-A- 1 408 133
- JP-A- 56 122 856
- US-A- 5 837 760
- US-A1- 2001 007 888
- US-A1- 2003 166 749
- US-A1- 2004 002 272
- US-A1- 2005 288 402
- US-A1- 2006 182 967
- US-B1- 7 168 231
- HUMMEL CROTON INC.: "Melamine Phosphate"[Online] 15 April 2007 (2007-04-15), XP002525050 Retrieved from the Internet: URL:http://www.hummelcroton.com/data/mop_d .html> [retrieved on 2009-04-23]
- "Flame retardants", UN Environment programme , EHC 192, 1997,

## Description

### BACKGROUND

There are various uses for elongated flexible assemblies such as for elevator load bearing members or roping arrangements, drive belts for machines such as a passenger conveyor and handrails for passenger conveyors, for example. Such assemblies may be designed with a plurality of cords covered by a polyurethane jacket. For example, U.S. Patent Nos. 6,295,799 and 6,739,433 show belts for use in suspending an elevator car and counterweight within an elevator system. An example passenger conveyor handrail construction is shown in 4,982,829. An example passenger conveyor drive belt is shown in 6,540,060.

With such assemblies, the polymer jacket may melt in extremely high temperature conditions such as when there is a fire in the vicinity of the assembly. Melting jacket material may drip onto other system components or structures in an undesirable manner. For example, molten jacket material of an elevator load bearing member may drip onto the top of the elevator car or onto the floor surface of an elevator pit. In the case of a passenger conveyor, the handrail may drop onto the balustrade or other components associated with the truss of the conveyor. Similarly, a drive belt in a passenger conveyor may melt and drip onto the drive components.

Patent application EP 1671913 - A discloses a tension member for an elevator system, wherein the tension member comprises spaced metallic cords encapsulated by a flame retardant coating layer.
The flame retardant coating layer may comprise melamine based compounds.

Patent application WO 2007/006989 - A discloses a reinforced composite comprising a thermoplastic organic polymer matrix and a plurality of reinforcing glass strands at least partially coated with a size composition. The matrix composition may contain at least one flame-retarding agent comprising melamine based compounds and/or may contain fillers providing good mechanical strength and/or dimensional stability.

Patent application US 2001/0007888 - A discloses a flame retardant resin composition with remarkable characteristics of impact resistance, heat resistance, dimensional stability and flame retardance of the resulting molded articles.
Said resin composition may include melamine based compounds.

It would be useful to be able to minimize or avoid such dripping or flowing of the material of a polymer jacket in the event of high temperature conditions such as during a fire.

### SUMMARY

The present invention relates to the use of a melamine based compound as a geometry stabilizer in an assembly comprising at least one elongated tension member and a jacket covering at least some of the at least one tension member, the jacket comprising a polymer material and the melamine based compound as defined in claim 1.

The present invention also relates to a method of making an assembly having at least one elongated cord tension member at least partially covered by a polymer jacket, the method being defined in claim 12.

Preferred embodiments of the invention are defined in the dependent claims 2 to 11 and 13 to 15.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system including a load bearing member designed according to an embodiment of this invention.
Figure 2 is an end view schematically showing one example elevator load bearing member assembly.
Figure 3 is an end view schematically illustrating another example elevator load bearing assembly.
Figure 4 diagrammatically illustrates a passenger conveyor including a drive belt and a handrail designed according to an embodiment of this invention.
Figure 5 schematically shows an example drive belt configuration.
Figure 6 schematically shows an example handrail configuration.
Figure 7 schematically illustrates an example method of making an assembly designed according to an embodiment of this invention.

### DETAILED DESCRIPTION

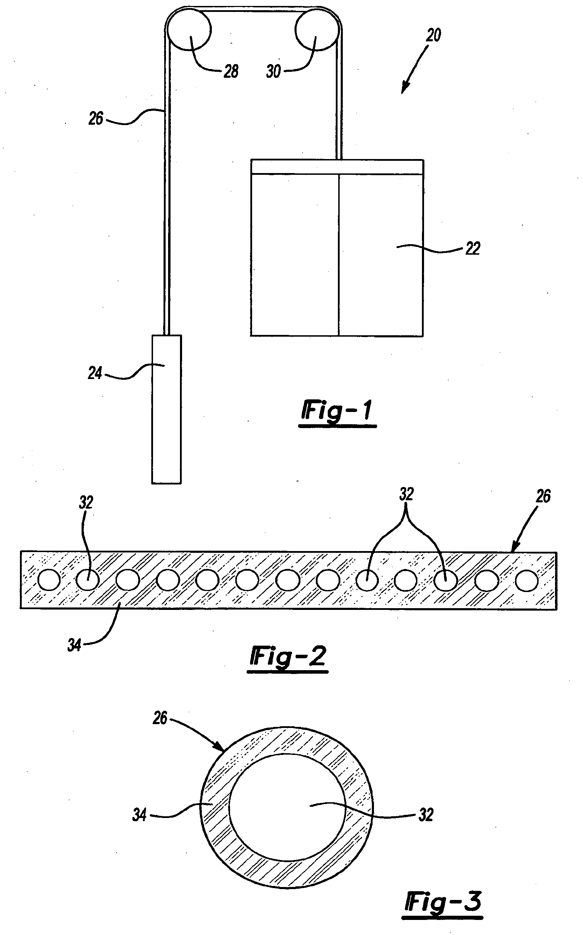

Figure 1 schematically shows selected portions of an example elevator system 20. An elevator car 22 and counterweight 24 are suspended by a load bearing assembly 26. In one example, the load bearing assembly 26 comprises a plurality of flat belts. In another example, the load bearing assembly 26 comprises a plurality of round ropes.

The load bearing assembly 26 supports the weight of the elevator car 22 and the counterweight 24 and facilitates movement of the elevator car 22 into desired positions by moving along sheaves 28 and 30. One of the sheaves will be a traction sheave that is moved by an elevator machine in a known manner to cause the desired movement and placement of the elevator car 22. The other sheave in this example is an idler sheave.

Figure 2 is an end view schematically showing one example flat belt configuration of the example load bearing assembly 26. In this example, the flat belt includes a plurality of elongated cord tension members 32 and a polymer jacket 34 that contacts the tension members 32. In this example, the jacket 34 encases the tension members 32. In one example, the tension members 32 comprise wound metallic cords, such as steel. The polymer jacket 34 in one example comprises a thermoplastic elastomer. In one example, the jacket 34 comprises a thermoplastic polyurethane.

Another example is schematically shown in Figure 3. An end view of a rope used as part of the load bearing assembly 26 includes at least one tension member 32 and a polymer jacket 34. In the example of Figure 3, the same materials can be used as those mentioned above.

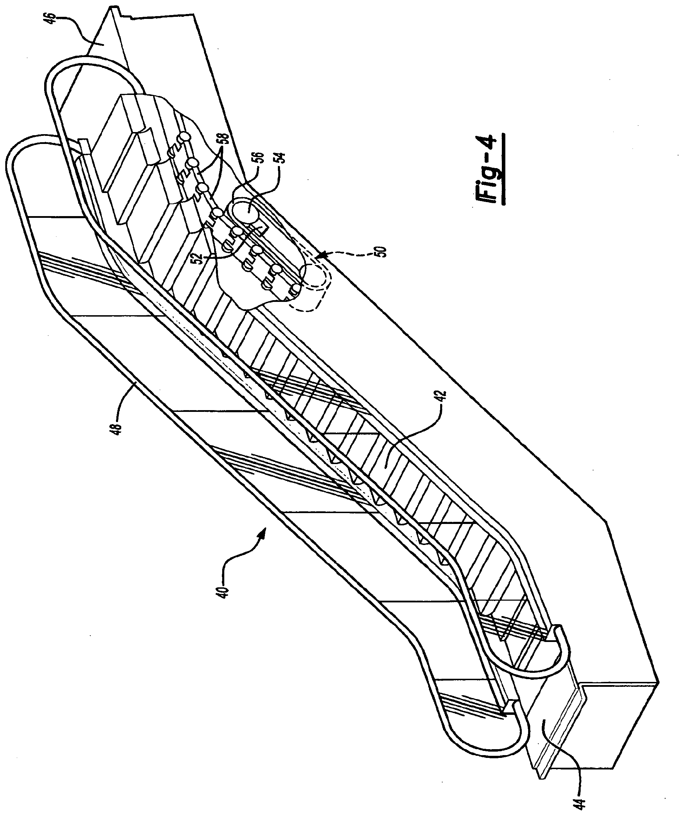

Figure 4 schematically illustrates an example passenger conveyor 40. In this example, a plurality of steps 42 move in a known manner to carry passengers between landings 44 and 46. A handrail 48 is provided for passengers to grab onto while traveling on the conveyor 40.

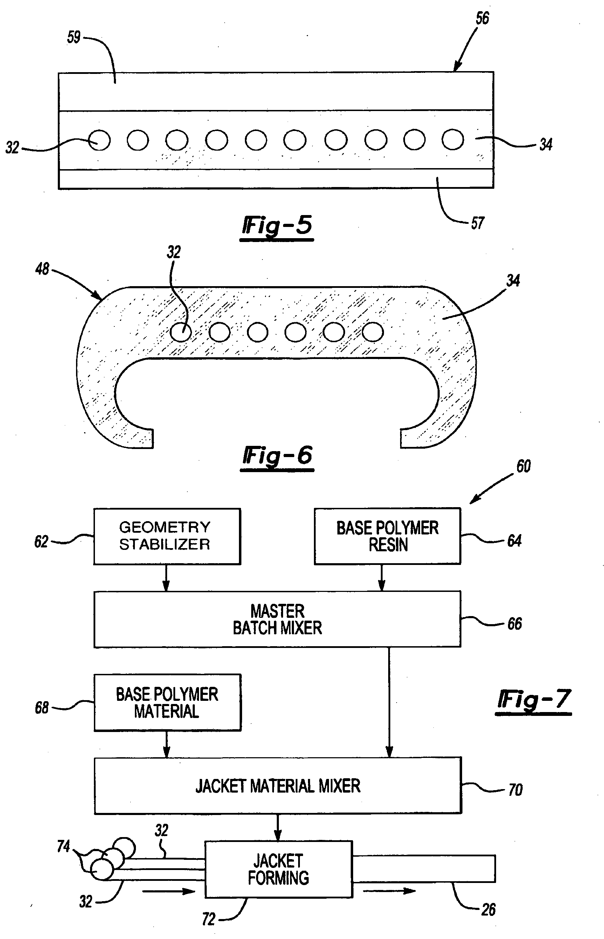

As shown in Figure 6, the handrail 48 includes a plurality of tension members 32 such as steel cords at least partially covered by a polymer jacket 34. The polymer jacket in this example establishes the gripping surface and the body of the handrail 48.

The example of Figure 4 and includes a drive arrangement 50 for propelling the steps 42 in a desired direction. A motor 52 rotates a drive sheave 54 to cause movement of a drive belt 56. As shown in Figure 5, the example drive belt 56 has a plurality of elongated cord tension members 32 covered by a jacket 34. The jacket material establishes teeth 57 that interact with a corresponding, surface on the drive sheave 54. A step chain 58 (Figure 4) is engaged by teeth 59 on the drive belt 56 to cause the desired movement of the steps 42.

When a metal is used for the any of the example tension members 32, the metal material may be uncoated, coated, or plated with a protective metal. For example, a base ferrous metal may be coated or plated with zinc, tin or copper.

In each of the above example assemblies, the jacket material includes a geometry stabilizer that facilitates maintaining the jacket material near the tension member or tension members even in high temperature conditions such as those associated with a fire in the vicinity of the assembly. The geometry stabilizer in some examples works by cross linking or forming a flow-resistant char or gel that inhibits flow of the thermoplastic polymer of the jacket material. The geometry stabilizers include melamine phosphate or melamine polyphosphate, which are useful when the jacket comprises a base thermoplastic elastomer such as thermoplastic polyurethane, or melamine phosphate and hydro-carbon phosphate.

The example geometry stabilizers provide flame retardancy through intumescence and char formation that prevents the jacket material from melting and dripping away from the associated tension members. In other words, the geometry stabilizer provides an intumescent shell that reduces the likelihood of the jacket material dripping or flowing onto nearby surfaces. The example geometry stabilizers are useful in that they have chemistry similar to the base material of the jacket so that they do not reduce the flexibility of the jacket or otherwise interfere with the characteristics of the jacket that are selected for the particular installation.

Figure 7 schematically shows an example method 60 for making an assembly. A supply 62 of a selected geometry stabilizer such as one of the phosphate-based geometry stabilizers mentioned above is mixed with a supply of a base polymer resin 64 in a master batch mixer 66. The amount of geometry stabilizer 62 provided within the master batch of mixed material may comprise up to 50% by weight of the mixed material. One example includes using between 20% and 50% by weight of the geometry stabilizer 62.

The resulting master batch of mixed material in this example is then compounded with a base polymer material 68 in a jacket material mixer 70. The resulting jacket material after the mixing at 70 may contain up to 20% by weight of the geometry stabilizer. One example includes using between 2% and 20% by weight of the geometry stabilizer in the jacket material.

The jacket material is then formed in a jacket forming station 72 such as a molding device to provide the desired geometry of the jacket. In the illustrated example, a plurality of spools 74 supply tension members 32 to the jacket forming station 72 whether the jacket is molded onto at least one exterior surface of the tension members 32 resulting in the desired assembly. In the case of Figure 7, the resulting assembly is an elevator load bearing member 26.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. Use of a melamine based compound as a geometry stabilizer, the geometry stabilizer comprising melamine phosphate, or melamine polyphosphate, or melamine phosphate and hydrocarbon phosphate, in an assembly comprising at least one elongated tension member and a jacket covering at least some of the at least one tension member, the jacket comprising a polymer material and the melamine based compound,
the geometry stabilizer facilitating maintaining the jacket material near the tension member if the assembly is subjected to a high temperature condition during a fire, and wherein the geometry stabilizer is operative to provide a stable, intumescent shell that prevents the jacket material from melting and dripping away from the at least one elongated tension member.

2. The use of claim 1, wherein the jacket material comprises thermoplastic poly - urethane and the geometry stabilizer comprises at least one of melamine-phosphate or melamine-polyphosphate.

3. The use of claim 1, wherein the jacket material comprises an elastomeric al - loy and the geometry stabilizer comprises hydrocarbon-phosphate.

4. The use of claim 1, wherein the assembly comprises a plurality of elongated cord tension members at least partially covered by the jacket.

5. The use of claim 1, wherein the assembly comprises an elevator load bearing member.

6. The use of claim 5, wherein the elevator load bearing member comprises a flat belt.

7. The use of claim 1, wherein the assembly comprises one of a passenger con - veyor drive member and a passenger conveyor handrail.

8. The use of claim 7, wherein the drive member comprises a drive belt.

9. The use of claim 1, wherein the polymer material comprises up to 50% by weight of the geometry stabilizer.

10. The use of claim 9, wherein the polymer material comprises between about 2% and about 20% by weight of the geometry stabilizer.

11. The use of claim 1, wherein the geometry stabilizer is operative to provide the stable, intumescent shell on an exterior of the jacket responsive to a high temperature condition.

12. A method of making an assembly having at least one elongated cord tension member at least partially covered by a polymer jacket, comprising the steps of:
providing a polymer material;
providing a melamine-based compound as a geometry stabilizer, the geometry stailizer comprising melamine phosphate, or melamine polyphosphate, or melamine phosphate and hydrocarbon phosphate; and
forming the polymer material and the geometry stabilizer into a desired shape of the jacket,
the geometry stabilizer facilitating maintaining the jacket material near the tension member if the assembly is subjected to a high temperature condition during a fire, by forming a stable intumescent shell that prevents the jacket material from melting and dripping away from the at least one elongated cord tension member.

13. The method of claim 12, comprising:
mixing a polymer base resin and said geometry stabilizer to provide a batch of mixed material; and
compounding said batch of mixed material with the polymer material to provide a batch of jacket material;
wherein said forming step uses said batch of jacket material.

14. The method of claim 12, wherein the mixing comprises using an amount corresponding to up to 50% by weight of the geometry stabilizer in the master batch of mixed material.

15. The method of claim 12, wherein the compounding comprises using an amount corresponding to between about 2% and about 20% by weight of the geometry stabilizer in the jacket material.

## Patentansprüche

1. Verwendung einer Zusammensetzung auf Melamin-Basis als Geometriestabilisator, wobei der Geometriestabilisator Melaminphosphat oder Melaminpolyphosphat oder Melaminphosphat und Kohlenwasserstoffphosphat umfasst, in einer Anordnung, die mindestens ein gestrecktes Zugglied und eine Hülle umfasst, die mindestens einen Teil des mindestens einen Zugglieds bedeckt, wobei die Hülle ein Polymermaterial und die Zusammensetzung auf Melamin-Basis umfasst,
wobei der Geometriestabilisator es erleichtert, das Hüllenmaterial nahe dem Zugglied zu halten, wenn die Anordnung während eines Feuers einem Hochtemperaturzustand ausgesetzt ist, und wobei der Geometriestabilisator dazu wirksam ist, eine stabile, intumeszente Schale bereitzustellen, die verhindert, dass das Hüllenmaterial schmilzt und von dem mindestens einen gestreckten Zugglied abtropft.

2. Verwendung nach Anspruch 1, wobei das Hüllenmaterial thermoplastisches Polyurethan umfasst und der Geometriestabilisator mindestens eines aus Melaminphosphat oder Melaminpolyphosphat umfasst.

3. Verwendung nach Anspruch 1, wobei das Hüllenmaterial eine elastomere Legierung umfasst und der Geometriestabilisator Kohlenwasserstoffphosphat umfasst.

4. Verwendung nach Anspruch 1, wobei die Anordnung eine Vielzahl von gestreckten Schnurzuggliedern umfasst, die mindestens teilweise durch die Hülle bedeckt sind.

5. Verwendung nach Anspruch 1, wobei die Anordnung ein Aufzugslasttragelement umfasst.

6. Verwendung nach Anspruch 5, wobei das Aufzugslasttragelement einen Flachriemen umfasst.

7. Verwendung nach Anspruch 1, wobei die Anordnung eines aus einem Fahrtreppenantriebselement und einem Fahrtreppenhandlauf umfasst.

8. Verwendung nach Anspruch 7, wobei das Antriebselement einen Antriebsriemen umfasst.

9. Verwendung nach Anspruch 1, wobei das Polymermaterial bis zu 50 Gewichts-% des Geometriestabilisators umfasst.

10. Verwendung nach Anspruch 9, wobei das Polymermaterial zwischen etwa 2 Gewichts-% und etwa 20 Gewichts-% des Geometriestabilisators umfasst.

11. Verwendung nach Anspruch 1, wobei der Geometriestabilisator dazu wirksam ist, die stabile, intumeszente Schale als Antwort auf einen Hochtemperaturzustand an einer Außenseite der Hülle bereitzustellen.

12. Verfahren zum Fertigen einer Anordnung, die mindestens ein gestrecktes Schnurzugglied aufweist, das mindestens teilweise durch eine Polymerhülle bedeckt ist, umfassend die folgenden Schritte:
Bereitstellen eines Polymermaterials;
Bereitstellen einer Zusammensetzung auf Melamin-Basis als Geometriestabilisator, wobei der Geometriestabilisator Melaminphosphat oder Melaminpolyphosphat oder Melaminphosphat und Kohlenwasserstoffphosphat umfasst; und
Formen des polymermaterials und des Geometriestabilisators in eine gewünschte Form der Hülle,
wobei der Geometriestabilisator es erleichtert, das Hüllenmaterial nahe dem Zugglied zu halten, wenn die Anordnung während eines Feuers einem Hochtemperaturzustand ausgesetzt ist, indem er eine stabile intumeszente Schale bildet, die verhindert, dass das Hüllenmaterial schmilzt und von dem mindestens einen gestreckten Schnurzugglied abtropft.

13. Verfahren nach Anspruch 12, umfassend:
Mischen eines Harzes auf Polymer-Basis und des Geometriestabilisators zum Bereitstellen eines Batches von Mischmaterial; und
Verbinden des Batches von Mischmaterial mit dem Polymermaterial zum Bereitstellen eines Batches von Hüllenmaterial;
wobei bei dem Schritt des Formens der Batch von Hüllenmaterial verwendet wird.

14. Verfahren nach Anspruch 12, wobei das Mischen die Verwendung einer Menge umfasst, die bis zu 50 Gewichts-% des Geometriestabilisators in dem Masterbatch von Mischmaterial entspricht.

15. Verfahren nach Anspruch 12, wobei das Verbinden die Verwendung einer Menge umfasst, die zwischen etwa 2 Gewichts-% und etwa 20 Gewichts-% des Geometriestabilisators in dem Hüllenmaterial entspricht.

## Revendications

1. Utilisation d'un composé à base de mélamine comme stabilisateur de géométrie, le stabilisateur de géométrie comprenant un phosphate de mélamine ou un polyphosphate de mélamine ou un phosphate de mélamine et un phosphate d'hydrocarbure, dans un assemblage comprenant au moins un élément tendu allongé et une enveloppe recouvrant au moins une partie de l'au moins un élément tendu, l'enveloppe comprenant un matériau polymère et le composé à base de mélamine,
le stabilisateur de géométrie facilitant le maintien du matériau de l'enveloppe à proximité de l'élément tendu si l'assemblage est soumis à une condition de température élevée lors d'un incendie, et dans laquelle le stabilisateur de géométrie est destiné à fournir une coque intumescente stable qui empêche le matériau de l'enveloppe de fondre et de ruisseler à partir de l'au moins un élément tendu allongé.

2. Utilisation selon la revendication 1, dans laquelle le matériau de l'enveloppe comprend un polyuréthane thermoplastique et le stabilisateur de géométrie comprend au moins l'un parmi le phosphate de mélamine ou le polyphosphate de mélamine.

3. Utilisation selon la revendication 1, dans laquelle le matériau de l'enveloppe comprend un alliage élastomère et le stabilisateur de géométrie comprend un phosphate d'hydrocarbure.

4. Utilisation selon la revendication 1, dans laquelle l'assemblage comprend une pluralité d'éléments tendus allongés de type corde au moins partiellement recouverts par l'enveloppe.

5. Utilisation selon la revendication 1, dans laquelle l'assemblage comprend un élément de support de charge d'ascenseur.

6. Utilisation selon la revendication 5, dans laquelle l'élément de support de charge d'ascenseur comprend une courroie plate.

7. Utilisation selon la revendication 1, dans laquelle l'assemblage comprend l'un parmi un élément d'entraînement de transporteur de passagers et une main courante de transporteur de passagers.

8. Utilisation selon la revendication 7, dans laquelle l'élément d'entraînement comprend une courroie d'entraînement.

9. Utilisation selon la revendication 1, dans laquelle le matériau polymère comprend jusqu'à 50 % en poids du stabilisateur de géométrie.

10. Utilisation selon la revendication 9, dans laquelle le matériau polymère comprend entre environ 2 % et environ 20 % en poids du stabilisateur de géométrie.

11. Utilisation selon la revendication 1, dans laquelle le stabilisateur de géométrie est destiné à fournir la coque intumescente stable sur une partie externe de l'enveloppe en réponse à une condition de température élevée.

12. Procédé de fabrication d'un assemblage comportant au moins un élément tendu allongé de type corde au moins partiellement recouvert par une enveloppe polymère, comprenant les étapes suivantes :
la fourniture d'un matériau polymère ;
la fourniture d'un composé à base de mélamine en tant que stabilisateur de géométrie , le stabilisateur de géométrie comprenant un phosphate de mélamine ou un polyphosphate de mélamine ou un phosphate de mélamine et un phosphate d'hydrocarbure; et
la formation du matériau polymère et du stabilisateur de géométrie en enveloppe de forme souhaitée,
le stabilisateur de géométrie facilitant le maintien du matériau de l'enveloppe à proximité de l'élément tendu si l'assemblage est soumis à une condition de température élevée lors d'un incendie, par la formation d'une coque intumescente stable qui empêche le matériau de l'enveloppe de fondre et de ruisseler à partir de l'au moins un élément tendu allongé de type corde.

13. Procédé selon la revendication 12, comprenant :
le mixage d'une résine polymère de base et dudit stabilisateur de géométrie pour fournir un lot de matériau mélangé ; et
le mélange dudit lot de matériau mélangé avec le matériau polymère pour fournir un lot de matériau d'enveloppe ;
dans lequel ladite étape de formation utilise ledit lot de matériau d'enveloppe.

14. Procédé selon la revendication 12, dans lequel le mixage comprend l'utilisation d'une quantité correspondant à 50 % en poids au maximum du stabilisateur de géométrie dans le mélange maître de matériau mélangé.

15. Procédé selon la revendication 12, dans lequel le mélange comprend l'utilisation d'une quantité correspondant à une quantité située entre environ 2 % et environ 20 % en poids du stabilisateur de géométrie dans le matériau d'enveloppe.
